# EUROPÄISCHE PATENTANMELDUNG

(11) **EP 4 458 877 A1**
(43) Veröffentlichungstag der Anmeldung: **06.11.2024**
(21) Anmeldenummer: 23171925.3
(22) Anmeldetag: 05.05.2023
(51) Int. Cl.: C08G 59/50

(54) **VERWENDUNG EINES TERTIÄREN AMINS ZUR VERBESSERUNG VON EIGENSCHAFTEN EINES CHEMISCHEN DÜBELS**

(71) Anmelder: Hilti Aktiengesellschaft, 9494 Schaan (LI)
(72) Erfinder: Martin-Lasanta, Ana-Maria, 35398 Gießen (DE)
(74) Vertreter: Hilti Aktiengesellschaft Corporate Intellectual Property

(57) **Zusammenfassung**

Die vorliegende Erfindung betrifft die Verwendung von mindestens einem tertiärem Amin in einem chemischen Dübel. Das mindestens eine tertiäre Amin ist ausgewählt aus der Gruppe bestehend aus 2,4,6-Tris[(di(C₁-C₆-alkyl)amino-(C₁-C₆-alkyliden)]phenolen, 1,3,5-Tris[(di(C₁-C₆-alkyl)amino-(C₁-C₆-alkyliden)]hexahydro-1,3,5-triazin und beliebigen Mischungen von zweien oder mehreren davon. Durch dieses spezifische mindestens eine tertiäre Amin wird das Kriechverhalten eines chemischen Dübels bei einer Untergrundtemperatur von etwa 30°C bis etwa 90°C verringert im Vergleich zu einem chemischen Dübel, welcher einen geringeren Anteil an dem mindestens einen tertiären Amin aufweist oder das mindestens eine tertiäre Amin nicht enthält.

## Beschreibung

Die vorliegende Erfindung betrifft die Verwendung von mindestens einem tertiärem Amin in einem chemischen Dübel. Das mindestens eine tertiäre Amin ist ausgewählt aus der Gruppe bestehend aus 2,4,6-Tris[(di(C₁-C₆-alkyl)amino-(C₁-C₆-alkyliden)]phenolen, 1,3,5-Tris[(di(C₁-C₆-alkyl)amino-(C₁-C₆-alkyliden)]hexahydro-1,3,5-triazin und beliebigen Mischungen von zweien oder mehreren davon. Durch dieses spezifische mindestens eine tertiäre Amin wird das Kriechverhalten eines chemischen Dübels bei einer Untergrundtemperatur von etwa 30°C bis etwa 90°C verringert im Vergleich zu einem chemischen Dübel, welcher einen geringeren Anteil an dem mindestens einen tertiären Amin aufweist oder das mindestens eine tertiäre Amin nicht enthält.

Im Bauwesen werden Harzsysteme zur chemischen Befestigung von Konstruktionselementen wie beispielsweise Ankerstangen, Bewehrungseisen und Schrauben, in Vertiefungen wie beispielsweise Bohrlöchern oder Spalten in Bauwerken eingesetzt. Derartige Harzsysteme werden auch als "chemische Dübel" bezeichnet.

Diese Harzsysteme können als einheitliche Harzmasse bereitgestellt werden, oder als System aus mehreren Komponenten. Üblicherweise sind Harzsysteme kommerziell als Mehrkomponenten-Harzsystem erhältlich. Unter einem Mehrkomponenten-Harzsystem ist ein Harzsystem mit mehreren Komponenten, typischerweise zwei Komponenten (Zwei-Komponenten-Harzsystem), mit (i) mindestens einer Harzkomponente (A) und (ii) mindestens einer Härterkomponente (B), sowie gegebenenfalls weiteren separaten Komponenten zu verstehen. Die Komponenten sind in separaten Behältern, so dass sie während der Lagerung und vor der Anwendung nicht miteinander in Berührung kommen und nicht miteinander reagieren können. Zur bestimmungsgemäßen Verwendung eines Mehrkomponenten-Harzsystems werden die Komponenten (A) und (B) und gegebenenfalls weitere Komponenten am gewünschten Einsatzort vermischt, so dass dort die Härtungsreaktion stattfinden kann.

Zur Aufbewahrung vor der Nutzung eignen sich Patronen, beispielsweise aus Kunststoff, Keramik oder Glas, in denen die Komponenten durch zerstörbare Abgrenzungswandungen oder integrierte separate zerstörbare Behältnisse voneinander getrennt angeordnet sind; beispielsweise als ineinander verschachtelte Patronen, bevorzugt Zweikammerpatronen, sowie insbesondere Mehr- oder bevorzugt Zweikomponentenkartuschen, in deren Kammern die Komponenten (A) und (B) eines Zwei-Komponenten-Harzsystems enthalten sind. Durch Zerstörung der Abgrenzungen in den Patronen bzw. Ausdrücken der Kartuschen durch beispielsweise einen Statikmischer werden die beiden oder mehreren Komponenten vermischt. Dadurch wird eine Härtungsreaktion, d.h. eine Polymerisation, in Gang gebracht und das Harz gehärtet.

Durch Vermischen der zwei oder mehr Komponenten für den vorgesehenen Verwendungszweck als chemischer Dübel entsteht eine Mischung, welche anschließend aushärtet, um einen chemisch vernetzten Verbundwerkstoff zu bilden. Das daraus resultierende gehärtete Material, also der ausgehärtete chemische Dübel, ist typischerweise besonders tragfähig und zeigt eine hohe Festigkeit sowie die Fähigkeit Spannungen an den Untergrund zu übertragen, wobei die strukturelle Integrität des chemischen Dübels auch bei Belastungen erhalten bleibt.

Die Aushärtung chemischer Dübel erfolgt typischerweise am gewünschten Verwendungsort bei den dort im Untergrund herrschenden Umgebungstemperaturen. Da chemische Dübel typischerweise im Bauwesen verwendet werden, entsprechen die Umgebungstemperaturen den Außentemperaturen. Diese bewegen sich üblicherweise im Bereich von etwa -10°C bis etwa 60°C. Im Untergrund sind je nach Sonneneinstrahlung und weiteren Einflüssen auch deutlich höhere Temperaturen möglich, beispielsweise von etwa 40°C bis etwa 90°C.

Die mechanischen Eigenschaften chemischer Dübel können durch die Umgebungstemperatur beeinträchtigt werden. So kann schon ein Temperaturanstieg während der Härtungsreaktion bereits zu einer erheblichen Abnahme der Tragfähigkeit des anschließend ausgehärteten chemischen Dübels führen.

Auch ist der chemische Dübel in seiner Lebenszeit immer wieder schwankenden Temperaturen ausgesetzt. Vor allem das Auftreten erhöhter Temperaturen über einen längeren Zeitraum kann die Tragfähigkeit eines chemischen Dübels beeinträchtigen. Bereits stark schwankende kurzfristige Untergrundtemperaturen, insbesondere aber langfristig erhöhte Untergrundtemperaturen, können sich während der Nutzungsdauer eines chemischen Dübels ungünstig auf dessen Materialeigenschaften auswirken.

Insbesondere kommt es verstärkt zum sogenannten "Kriechen", also zur Verformung eines chemischen Dübels. So kann sich ein chemischer Dübel bei einer erhöhten Untergrundtemperatur von etwa 30°C bis etwa 90°C bereits in einem Zeitraum von wenigen Stunden unter dem Einfluss anhaltender mechanischer Beanspruchungen, wie z. B. Dauerlasten, langsam bewegen oder dauerhaft verformt werden.

Mit zunehmender Klimaerwärmung ist zukünftig auch im Bauwesen mit höheren Umgebungstemperaturen im Untergrund infolge starker Sonneneinstrahlung zu rechnen, wodurch sich der Untergrund auf eine Untergrundtemperatur je nach Außentemperatur und Wetterlage auf etwa 40°C oder darüber aufheizen kann. Mehrkomponenten-Harzsysteme, die im Stand der Technik beschrieben sind, zeigen sich diesen Herausforderungen häufig nicht gewachsen.

Um der Kriechneigung von chemischen Dübeln entgegenzuwirken, ist die Entwicklung neuer Mehrkomponenten-Harzsysteme zur Anwendung bei erhöhten Temperaturen, insbesondere von etwa 40°C bis etwa 90°C, wünschenswert.

Ein häufig verwendetes Mehrkomponenten-Harzsystem für einen chemischen Dübel ist ein System auf Epoxid-Amin-Basis. In einem solchen Mehrkomponenten-Harzsystem enthält die Harzkomponente (A) mindestens ein härtbares Epoxidharz, und die Härterkomponente (B) enthält mindestens ein epoxid-reaktives Amin zur Aushärtung des Epoxidharzes.

Typischerweise umfassen Epoxid-Amin-Systeme weitere übliche Bestandteile, wie beispielsweise Reaktivverdünner, Füllstoffe, Rheologieadditive, Beschleuniger, Inhibitoren und/oder Lösemittel, die in einer oder beiden Komponenten (A) und/oder (B) enthalten sein könnten. Ferner können sie gegebenenfalls auch spezielle Füllstoffe enthalten, welche selbst durch hydraulisches Abbinden zur Verfestigung beitragen können, wie im Falle von Zement.

Jedoch ist bekannt, dass im Stand der Technik beschriebene Epoxid-Amin-Systeme eine deutliche Verschlechterung der mechanischen Eigenschaften bei erhöhten Temperaturen, also Temperaturen oberhalb von 20°C insbesondere aber ab etwa 40°C, aufweisen. Wie oben beschrieben, besteht diese Verschlechterung oft in einer Verringerung der Langzeitstabilität unter Dauerbelastung, so dass es zu Verformungen des chemischen Dübels und daraus resultierend sogar zu Verschiebungen in der durch den chemischen Dübel befestigten Bausubstanz kommen kann.

Ferner ist auch bekannt, dass die Verschlechterung der mechanischen Eigenschaften bei Materialien mit deren Glasübergangstemperatur (Tg) zusammenhängt. Chemische Dübel auf der Basis von Epoxid-Amin-Systemen weisen in der Regel eine vergleichsweise niedrige Tg auf. Daher neigen Epoxid-Amin-Systeme häufig dazu, bei einer erhöhten Untergrundtemperatur zu kriechen.

Die in Harzsystemen auf Epoxid-Amin-Basis enthaltenen primären und sekundären Amine sind häufig als "ätzend" gekennzeichnet (GHS05), wodurch sich für den Anwender Probleme im Umgang und eventuell die Notwendigkeit von Schutzausrüstung ergeben.

Eine der Erfindung zugrundeliegende Aufgabe ist demzufolge die Bereitstellung eines Zwei-Komponenten-Harzsystems, welches bei Verwendung als chemischer Dübel bei einer erhöhten Untergrundtemperatur wie beispielsweise von etwa 30°C bis etwa 90°C ein verbessertes Kriechverhalten zeigt.

Eine weitere der Erfindung zugrundeliegende Aufgabe ist die Bereitstellung eines Zwei-Komponenten-Harzsystems für einen chemischen Dübel, der nach dem Aushärten eine hohe Druckfestigkeit, beispielsweise von über etwa 110 MPa, aufweist. Eine weitere der Erfindung zugrundeliegende Aufgabe ist die Bereitstellung eines Zwei-Komponenten-Harzsystems für einen chemischen Dübel, der eine hohe Glasübergangstemperatur, beispielsweise von über etwa 70°C aufweist.

Eine weitere der Erfindung zugrundeliegende Aufgabe ist daher die Bereitstellung eines umweltfreundlichen Zwei-Komponenten-Harzsystems für die Verwendung als chemischer Dübel, in dessen Härterkomponente (B) keine primären oder sekundären Amine zum Einsatz kommen.

Die der Erfindung zugrundeliegenden Aufgaben werden durch die in den unabhängigen Ansprüchen definierten Verwendungen gelöst. Bevorzugte Ausführungsformen der Erfindung sind in den abhängigen Ansprüchen definiert, deren Merkmale, soweit nicht anders angegeben, frei miteinander kombiniert werden können.

Ein Gegenstand der Erfindung ist die Verwendung von mindestens einem tertiären Amin, um das Kriechen eines ausgehärteten chemischen Dübels bei einer Untergrundtemperatur von etwa 30°C bis etwa 90°C zu verringern im Vergleich zu einem chemischen Dübel, welcher einen geringeren Anteil an dem mindestens einen tertiärem Amin enthält oder das mindestens eine tertiäre Amin nicht enthält. Der ausgehärtete chemische Dübel wird hergestellt durch Vermischen der Komponenten (A) und (B) eines Zwei-Komponenten-Harzsystems und anschließendes Aushärten, wobei das Zwei-Komponenten-Harzsystem besteht aus: (i) einer Harzkomponente (A) umfassend mindestens ein härtbares Epoxidharz, und (ii) einer Härterkomponente (B) umfassend das mindestens eine tertiäre Amin. Das tertiäre Amin fungiert in diesem Harzsystem als Beschleuniger für die Härtung des Epoxidharzes. Das mindestens eine tertiäre Amin ist ausgewählt aus der Gruppe bestehend aus 2,4,6-Tris[(di(C₁-C₆-alkyl)amino-(C₁-C₆-alkyliden)]phenolen, 1,3,5-Tris[(di(C₁-C₆-alkyl)amino-(C₁-C₆-alkyliden)]hexahydro-1,3,5-triazin und beliebigen Mischungen von zweien oder mehreren davon. In einer bevorzugten Ausführungsform ist es ausgewählt aus der Gruppe bestehend aus Tris[(di(C₁-C₆-alkyl)amino-(C₁-C₆-alkyliden)]phenolen und beliebigen Mischungen von zweien oder mehreren davon. In einer weiteren bevorzugten Ausführungsform ist es ausgewählt aus der Gruppe bestehend aus 2,4,6-Tris[(dimethylaminomethyl)phenol und 1,3,5-Tris-[3-(dimethylamino)propyl]hexahydro-1,3,5-triazin und beliebigen Mischungen davon.

Der Anteil des mindestens einen tertiären Amins an der durch das Vermischen der beiden Komponenten (A) und (B) entstandenen Harzmasse beträgt von etwa 3 Gew.-% bis etwa 20 Gew.-%, bevorzugt von etwa 4 bis etwa 15 Gew.-% bezogen auf das mindestens eine härtbare Epoxidharz.

Das in der Erfindung verwendete Zwei-Komponenten-Harzsystem (hier auch als "Zwei-Komponenten-Epoxidharzsystem" bezeichnet) umfasst kein primäres und kein sekundäres Amin.

Ein weiterer Gegenstand der Erfindung ist die Verwendung desselben Zwei-Komponenten-Harzsystems, welches mindestens ein wie oben definiertes tertiäres Amin umfasst, als chemischer Dübel zur Befestigung von Konstruktionselementen und Verankerungsmitteln in Vertiefungen, wie beispielsweise Löchern oder Spalten in einem Untergrund wie beispielsweise einem baulichen Untergrund. Der aus dieser Verwendung entstehende chemische Dübel kann nach dem Aushärten der Harzmasse Lasten bei einer Untergrundtemperatur von etwa 30°C bis etwa 90°C tragen und weist ein verbessertes Kriechverhalten auf im Vergleich zu chemischen Dübeln mit einem geringeren Gehalt oder gar keinem Gehalt an dem wie oben definierten tertiären Amin.

Das für die erfindungsgemäße Verwendungen als chemischer Dübel eingesetzte Zwei-Komponenten-Harzsystem umfasst: (i) eine Harzkomponente (A) umfassend mindestens ein härtbares Epoxidharz, und (ii) eine Härterkomponente (B) umfassend das mindestens eine tertiäre Amin. Das Zwei-Komponenten-Harzsystem umfasst kein primäres und kein sekundäres Amin.

Überraschenderweise wurde festgestellt, dass die Verwendung eines spezifischen mindestens einen tertiären Amins in einem Zwei-Komponenten-Epoxidharzsystem in einem Anteil von etwa 3 Gew.-% bis etwa 20 Gew.-%, bevorzugt von etwa 4 bis etwa 15 Gew.-% bezogen auf das mindestens eine härtbare Epoxidharz, in Abwesenheit von primären und sekundären Aminen, das Kriechverhalten eines chemischen Dübels bei einer Untergrundtemperatur von etwa 30°C bis etwa 90°C verbessert im Vergleich zu einem chemischen Dübel, welcher einen geringeren Anteil an dem mindestens einen tertiären Amin oder gar keinen Anteil an dem mindestens einen tertiären Amin enthält.

Es ist daher erfindungswesentlich, dass der Anteil des mindestens einen tertiären Amins an der durch das Vermischen der beiden Komponenten (A) und (B) entstandenen Harzmasse von etwa 3 Gew.-% bis etwa 20 Gew.-%, bevorzugt von etwa 4 bis etwa 15 Gew.-%, noch bevorzugter von etwa 5 bis etwa 10 Gew.-% bezogen auf das mindestens eine härtbare Epoxidharz beträgt.

Darüber hinaus wurde überraschenderweise festgestellt, dass ein Zwei-Komponenten-Epoxidharzsystem umfassend mindestens ein solches tertiäres Amin sich grundsätzlich als chemischer Dübel eignet und insbesondere bei einer Untergrundtemperatur von etwa 30°C bis etwa 90°C vorteilhafte Eigenschaften besitzt.

Im Sinne der Erfindung haben die hier und in der nachfolgenden Beschreibung verwendeten Begriffe die folgende Bedeutung:
- "*Zwei-Komponenten-Harzsystem"* bezeichnet ein Harzsystem, das zwei getrennt gelagerte Komponenten umfasst, wobei das Harzsystem mindestens eine Harzkomponente (A) und mindestens eine Härterkomponente (B) umfasst, so dass eine Härtung erst nach dem Mischen aller Komponenten erfolgt.
- *"Epoxidharzmasse"* bezeichnet eine reaktionsfähige Masse umfassend ein härtbares Epoxidharz und einen geeigneten Härter für das härtbare Epoxidharz. Erfindungsgemäß wird diese typischerweise durch Mischen der Harzkomponente (A) und der Härterkomponente (B) erhalten und anschließend zur chemischen Befestigung verwendet.
- *"härtbares Epoxidharz"* bezeichnet ein Harz, welches reaktive Epoxidgruppen enthält, die mit einem geeigneten Härter zu einem gehärteten Harz in einer Polymerisationsreaktion umgesetzt werden können, wobei eine Epoxid-Gruppe, auch Glycidyl-Gruppe genannt, ein zyklischer Ether mit einem dreiatomigen Ring ist.
- *"mittlere Epoxid-Funktionalität"* beschreibt die gemittelte Anzahl an reaktiven Epoxid-Gruppen eines oder einer Mischung aus mehreren härtbaren Epoxidharzen pro Molekül.
- *"Untergrundtemperatur"* bezeichnet die Temperatur des Untergrunds an der Kontaktfläche zur auszuhärtenden Epoxidharzmasse. Die Untergrundtemperatur ist abhängig von der Umgebungstemperatur, im Bauwesen typischerweise der Außentemperatur, sowie möglicher Erwärmung durch Sonneneinstrahlung. Auch eine Erwärmung durch externe Wärmezufuhr durch künstliche Wärmequellen wie etwa einen Heizblock oder einen Heizlüfter ist möglich. Die Untergrundtemperatur kann mit Hilfe eines Infrarot-Thermometers bestimmt werden. Kurzfristig erhöhte Untergrundtemperaturen sind solche, die in kurzen Abständen auftreten, z. B. als Folge von Tageszyklen. Als langfristig erhöhte Untergrundtemperatur bezeichnet man eine über längere Zeiträume (wie Wochen und Monate) erhöhte mittlere Untergrundtemperatur. Die Untergrundtemperatur kann beispielsweise mit Hilfe eines Infrarot-Thermometers an der Oberfläche des Untergrunds bestimmt werden.
- "*Amine*" sind Verbindungen, die sich von Ammoniak ableiten, indem ein, zwei oder drei Wasserstoffatome durch Kohlenwasserstoffgruppen ersetzt werden, und die die allgemeinen Strukturen RNH₂ (primäre Amine), R₂NH (sekundäre Amine) und R₃N (tertiäre Amine) aufweisen.
- "*Chemischer Dübel*" bezeichnet eine härtbare Harzmasse, im Kontext der vorliegende Erfindung eine härtbare Epoxidharzmasse zur chemischen Befestigung von Konstruktionselementen und Verankerungsmitteln in einer Vertiefung, insbesondere einem (Bohr)loch oder Spalt in verschiedenen Untergründen, insbesondere baulichen Untergründen (wie Mauerwerk, Beton). Nach der Härtungsreaktion entsteht eine feste Verbindung zum Untergrund. Bevorzugte Anwendungen sind im Baubereich, beispielsweise zur Befestigung von Ankerstangen, Ankerbolzen, (Gewinde)stangen, (Gewinde)hülsen, Betoneisen, oder Schrauben in Mauerwerk oder Beton.
- "*Kriechverhalten*" beschreibt die plastische Verformung, Verschiebung oder Bewegung eines chemischen Dübels infolge anhaltender Lasteinwirkung, einer sogenannten Dauerlast. Das Kriechverhalten wird vor allem durch zwei Faktoren beeinflusst: (i) anhaltend hohe Lasten, und (ii) erhöhte Temperatur. Das Kriechverhalten kann wie in den Ausführungsbeispielen beschrieben ermittelt werden.
- *"geringerer Anteil"* ist ein um 10 % geringerer Anteil, in einer bevorzugten Ausführungsform ein um 50 % geringerer Anteil im Vergleich zum Vergleichsanteil. In einer speziellen, bevorzugten Ausführungsform bedeutet "*geringerer Anteil von"* auch "*in Abwesenheit von".*
- *"aliphatische Verbindungen"* sind acyclische oder cyclische, gesättigte oder ungesättigte Kohlenwasserstoffverbindungen, ausgenommen aromatische Verbindungen.
- *"aromatische Verbindungen"* sind cyklische Kohlenwasserstoffverbindungen, die der Hückel(4n+2)-Regel folgen.
- *"alicyclische Verbindungen"* sind aliphatische Verbindungen mit einer carbocyclischen Ringstruktur, ausgenommen Benzol(derivat)e oder andere aromatische Systeme.
- *"poly", "Poly"* als Präfix bedeutet, dass zwei oder mehr der sich an dieses Präfix anschließenden Gruppen in einer Verbindung enthalten sind.
- *"ein", "eine", "einer"* als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können; in einer bevorzugten Ausführungsform ist mit diesem Begriff zahlenmäßig *"ein", "eine", "einer"* gemeint.
- *"mindestens ein", "mindestens eine", "mindestens einer"* zahlenmäßig *"ein oder mehrere";* in einer bevorzugten Ausführungsform ist mit diesem Begriff zahlenmäßig *"ein", "eine", "einer"* gemeint.
- "*etwa"* vor einem Zahlenwert erlaubt eine Abweichung von ±10 %, in einer bevorzugten Ausführungsform ±5 %, in einer stark bevorzugten Ausführungsform ±1 % von diesem Zahlenwert, in der am stärksten bevorzugten Ausführungsform bedeutet *"etwa"* genau diesen Zahlenwert, also eine Abweichung von ±0 %.
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden, soweit nicht anders angegeben, in der zum Anmeldetag dieser Anmeldung aktuellen Ausgabe verwendet. Alle Handelsnamen entsprechenden den Produkten, wie sie unter diesen Handelsnamen zum Zeitpunkt des Anmeldetages der vorliegenden Anmeldung verfügbar waren.

Wie vorstehend ausgeführt sieht die Erfindung die Verwendung eines Zwei-Komponenten-Harzsystems als chemischer Dübel vor. Im Folgenden werden die Bestandteile der Komponenten (A) und (B) eines in der Erfindung verwendeten Zwei-Komponenten-Harzsystems näher erläutert.

### Härtbares Epoxidharz

Die Harzkomponente (A) eines Zwei-Komponenten-Harzsystems, welches gemäß der Erfindung verwendet wird, umfasst mindestens ein härtbares Epoxidharz. Sie wird daher im Kontext der Erfindung auch als "Epoxidharzkomponente" bezeichnet.

Als das mindestens eine härtbare Epoxidharz in der Harzkomponente (A) kommt eine Vielzahl der hierfür dem Fachmann bekannten und kommerziell erhältlichen Verbindungen, einzeln oder in beliebigen Mischungen untereinander, in Betracht.

Ein erfindungsgemäß verwendbares Epoxidharz kann sowohl gesättigt als auch ungesättigt sowie aliphatisch, alicyclisch, aromatisch oder heterocyclisch sein und auch Hydroxylgruppen aufweisen. Es kann weiterhin solche Substituenten enthalten, die unter den erfindungsgemäßen Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet. Epoxidharze liegen bevorzugt flüssig vor und haben in der Regel ein durchschnittliches Molekulargewicht von MW ≤ 2000 g/mol.

Das härtbare Epoxidharz hat bevorzugt eine mittlere Epoxid-Funktionalität von etwa 1,5 oder größer, bevorzugter von etwa 2 oder größer, stärker bevorzugt von etwa 2 bis etwa 10, noch stärker bevorzugt von etwa 2 bis etwa 3, am bevorzugtesten von etwa 2.

Ein in der vorliegenden Erfindung verwendetes härtbares Epoxidharz kann ein Epoxyäquivalentgewicht (EEW, epoxy equivalent weight) von etwa 120 bis etwa 2000 g/EQ aufweisen, vorzugsweise von etwa 140 bis etwa 400 g/EQ, insbesondere von etwa 155 bis etwa 300 g/EQ, ganz besonders von 158 bis 290 g/EQ. Insbesondere bevorzugt sind härtbare Epoxidharze mit den in den Ausführungsbeispielen angegebenen EEW.

Vorzugsweise handelt es sich bei dem mindestens einen härtbaren Epoxidharz um ein Glycidylether, der sich von einem mehrwertigen Alkohol, insbesondere von einem mehrwertigen Phenol, wie beispielsweise Bisphenol und Novolak, ableitet. Beispiele für derartige geeignete Epoxidharze sind Verbindungen ausgewählt aus der Gruppe der Diglycidylether auf Basis von Resorcin, Hydrochinon, 2,2-Bis-(4-Hydroxyphenyl)-propan (Bisphenol A), Isomerengemischen des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan. Insbesondere bevorzugt sind härtbare Epoxidharze ausgewählt aus der Gruppe der Diglycidylether auf Basis von Bisphenol A und Bisphenol F und Mischungen davon, insbesondere die in den Ausführungsbeispielen verwendeten Mischungen.

Ein bevorzugtes Beispiel für ein kommerziell erhältliches Bisphenol F-basiertes Epoxidharz, enthaltend Bisphenol-F-diglycidylether, ist Araldite GY 282. Ein Beispiel für ein kommerziell erhältliches Bisphenol A-basiertes Epoxidharz, enthaltend Bisphenol-A-diglycidylether, ist Araldite GY 240.

In einer weiteren bevorzugten Ausführungsform ist das mindestens eine härtbare Epoxidharz ein Epoxidharz, das aus nachwachsenden Quellen hergestellt wurde. Derartige Epoxidharze aus nachwachsenden Quellen sind beispielsweise Isosorbiddiglycidylether (CAS 13374-44-2), Limonen-1,2:8,9-dioxid (LDO, CAS 96-08-2), Vanillindiglycidylether (DGEVA, CAS 1584677-14-4), Phloroglycinol-triglycidylether (PTHE, CAS 4223-14-7), Vanillinsäure-bisepoxid (CAS 1393710-63-8), und epoxidiertes Pflanzenöl, wie z. B. epoxidiertes Rizinusöl (CAS 105839-17-6, kommerziell erhältlich als Erisys GE 35-H von Huntsman, Belgien) und epoxidiertes Cardanolöl (Mischung enthaltend u.a. CAS 1260636-34-7 und CAS 63284-28-6). Neben Erisys GE 35-H sind Beispiele für kommerziell in größeren Mengen erhältliche bio-basierte Polyepoxide, die im Rahmen der Erfindung eingesetzt werden können, auch Erisys GE 60 und GE 61 (Epoxidharz auf Basis von Sorbitol; Huntsman, Belgien) sowie Araldite DY-S (Epoxidharz auf Basis von Polyglycerin; Huntsman, Belgien).

Der Anteil des mindestens einen härtbaren Epoxidharzes an der Harzkomponente (A) beträgt >0 bis 100 Gew.-%, bevorzugt von etwa 20 bis etwa 90 Gew.-%, bevorzugter von etwa 30 bis etwa 85 Gew.-%, und besonders bevorzugt von etwa 40 bis etwa 80 Gew.-%, bezogen auf das Gesamtgewicht der Harzkomponente (A).

Der Anteil des mindestens einen härtbaren Epoxidharzes nach dem Vermischen der Komponenten (A) und (B) beträgt in etwa 30 Gew.-% bis etwa 70 Gew.-% bezogen auf das Gesamtgewicht der miteinander vermischten Komponenten (A) und (B), bevorzugt in etwa 40 Gew.-% bis etwa 65 Gew.-% bezogen auf das Gesamtgewicht der miteinander vermischten Komponenten (A) und (B).

### Tertiäres Amin

Die Härterkomponente (B) eines Zwei-Komponenten-Harzsystems zur Verwendung gemäß der Erfindung umfasst mindestens ein tertiäres Amin ausgewählt aus der Gruppe bestehend aus 2,4,6-Tris[(di(C₁-C₆-alkyl)amino-(C₁-C₆-alkyliden)]phenolen, 1,3,5-Tris[(di(C₁-C₆-alkyl)amino-(C₁-C₆-alkyliden)]hexahydro-1,3,5-triazin und beliebigen Mischungen von zweien oder mehreren davon.

In einer bevorzugten Ausführungsform ist das mindestens eine tertiäre Amin ausgewählt aus der Gruppe bestehend aus Tris[(di(C₁-C₆-alkyl)amino-(C₁-C₆-alkyliden)]phenolen und beliebigen Mischungen von zweien oder mehreren davon.

In einer weiteren bevorzugten Ausführungsform ist das mindestens eine tertiäre Amin ausgewählt aus der Gruppe bestehend aus 2,4,6-Tris[(dimethylaminomethyl)phenol und 1,3,5-Tris-[3-(dimethylamino)propyl]hexahydro-1,3,5-triazin und beliebigen Mischungen davon.

In einer besonders bevorzugten Ausführungsform ist das mindestens eine tertiäre Amin 2,4,6-Tris(dimethylaminomethyl)phenol.

Kommerziell erhältlich ist 2,4,6-Tris-(dimethylaminomethyl)phenol unter dem Handelsnamen Ancamine^{®} K54 und 1,3,5-Tris[3-(dimethylamino)propyl]hexahydro-1,3,5-triazin unter dem Handelsnamen Lupragen^{®} N600. Kommerziell erhältliches Ancamine^{®} K54 in technischer Qualität kann als Verunreinigungen 2,4,6-Tris(di-C₂-C₆-alkylamino)phenol, 2,4,6-Tris(dimethylamino)phenol und/oder Bis[(dimethylamino)methyl]phenol enthalten.

In einer besonders bevorzugten Ausführungsform wird für die erfindungsgemäße Verwendung zur Verbesserung des Kriechverhaltens eines chemischen Dübels 2,4,6-Tris-(dimethylaminomethyl)phenol verwendet.

Der Anteil des mindestens einen tertiären Amins an der durch das Vermischen der beiden Komponenten (A) und (B) entstandenen Harzmasse beträgt von etwa 3 Gew.-% bis etwa 20 Gew.-%, bevorzugt von etwa 4 bis etwa 15 Gew.-%, noch bevorzugter von etwa 5 bis etwa 10 Gew.-% bezogen auf das mindestens eine härtbare Epoxidharz.

### Weitere Bestandteile der Komponenten (A) und (B)

Sowohl die Harzkomponente (A), als auch die Härterkomponente (B), als auch beide Komponenten (A) und (B) umfassen typischerweise neben dem härtbaren Epoxidharz bzw. dem mindestens einen tertiären Amin mindestens einen weiteren Bestandteil. Weitere übliche Bestandteile sind insbesondere Reaktivverdünner, Füllstoffe, Rheologieadditive (Thixotropiermittel), Haftvermittler und Lösemittel.

Je nach gewünschter Wirkung eines weiteren Bestandteils kann es bevorzugt sein, dass der mindestens eine weitere Bestandteil nur in der Harzkomponente (A), nur in der Härterkomponente (B), oder in beiden Komponenten enthalten ist.

### Reaktivverdünner

In einer Ausführungsform kann die Harzkomponente (A) und/oder die Härterkomponente (B), bevorzugt zumindest die Harzkomponente (A), mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Molekularmasse und Viskosität als die weiter oben beschriebenen härtbaren Epoxidharze aufweisen.

Beispiele für geeignete Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether (HDDGE), sowie Tri- oder höhere Glycidylether, wie Glycerintriglycidylether, Pentaerythrittetraglycidylether, Trimethylolpropan-triglycidylether (TMPTGE) oder Trimethylolethantriglycidylether (TMETGE), wobei BDDGE, HDDGE, Trimethylolpropantriglycidylether und Trimethylolethantriglycidylether bevorzugt sind. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder aus 1,4-Butandioldiglycidylether (BDDGE) und Trimethylolethantriglycidylether (TMETGE). Besonders bevorzugt sind die in den Beispielen verwendeten Reaktivverdünner und deren dort verwendete Mischungen.

Der mindestens eine Reaktivverdünner liegt, wenn er vorhanden ist, bevorzugt in einem Anteil von >0 bis etwa 30 Gew.-% bezogen auf das Gesamtgewicht der Komponente, in der der Reaktivverdünner enthalten ist (beispielsweise der Harzkomponente (A)) vor, insbesondere in einem Anteil von etwa 10 bis etwa 25 Gew.-% bezogen auf das Gesamtgewicht der Komponente.

### Füllstoffe

Sowohl die Harzkomponente (A), als auch die Härterkomponente (B), als auch beide Komponenten (A) und (B) können mindestens einen Füllstoff enthalten. Es ist bevorzugt, dass sowohl die Harzkomponente (A) als auch die Härterkomponente (B) jeweils mindestens einen Füllstoff enthalten.

Als Füllstoffe dienen bevorzugt anorganische Füllstoffe, insbesondere Quarz, Aluminiumoxide, Glas, Korund, Porzellan, Steingut, Schwerspat, Leichtspat, Gips, Talkum, Zemente (wie Portlandzement oder Aluminatzement), und/oder Kreide sowie deren Mischungen. Die anorganischen Füllstoffe können in Form von Partikeln (beispielsweise in Form von Pulvern, Sanden, oder Mehlen) oder Formkörpern (letzteres vorzugsweise in Form von Fasern oder Kugeln), zugesetzt werden. Durch eine geeignete Auswahl der Füllstoffe hinsichtlich Art und Partikelgrößenverteilung, Partikelgröße oder (Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich als Produktserie Silbond der Firma Quarzwerke erhältlich. Hierbei sind die Produktserien Silbond EST (Epoxysilan-behandelt) und Silbond AST 25 (Aminosilan-behandelt) besonders bevorzugt. Ferner können Aluminiumoxid-basierte Füllstoffe wie beispielsweise Aluminiumoxidfeinstfüller vom Typ ASFP der Firma Denka, Japan, (d₅₀ = 0,3 µm) oder Qualitäten wie DAW oder DAM mit den Typenbezeichnungen 45 (dso < 0,44 µm), 07 (dso > 8,4 µm), 05 (dso < 5,5 µm), 03 (dso < 4,1 µm) eingesetzt werden. Weiterhin können die oberflächenbehandelten Fein- und Feinstfüllstoffe vom Typ Aktisil AM 30 (Aminosilan-behandelt, dso = 2,2 µm) und Aktisil EM (Epoxysilan-behandelt, d₅₀=2,2 µm) von Hoffman Mineral verwendet werden. Die Füllstoffe können einzeln oder auch in beliebiger Mischung untereinander verwendet werden. Besonders bevorzugt ist nicht oberflächenbehandeltes Quarzmehl, insbesondere Millisil W12.

Der Anteil der Füllstoffe in der Harzkomponente (A) liegt vorzugsweise bei etwa 1 bis etwa 60 Gew.-%, bevorzugt bei etwa 15 bis etwa 45 Gew.-% bezogen auf das Gesamtgewicht der Harzkomponente (A). Der Anteil der Füllstoffe in der Härterkomponente (B) liegt vorzugsweise bei etwa 1 bis etwa 50 Gew.-%, bevorzugt bei etwa 5 bis etwa 40 Gew.-% bezogen auf das Gesamtgewicht der Härterkomponente (B). Der Gesamtfüllgrad einer Epoxidharzmasse aus den Komponenten (A) und (B) liegt, wenn mindestens ein Füllstoff vorhanden ist, in einem Bereich von >0 bis etwa 60 Gew.-%, bevorzugt in einem Bereich von etwa 10 bis etwa 55 Gew.%, noch bevorzugter in einem Bereich von etwa 30 bis etwa 50 Gew.-%. Der Gesamtfüllgrad der Epoxidharzmasse bezieht sich auf den gewichtsprozentualen Anteil aller vorhandenen Füllstoffe bezogen auf das Gesamtgewicht aus Komponente (A) und Komponente (B).

### Rheologieadditive

Weitere optionale Bestandteile sind Rheologieadditive zur Einstellung der Fließeigenschaften. Geeignete Rheologieadditive sind:
In einer Ausführungsform kann/können die Harzkomponente (A), die Härterkomponente (B) oder beide Komponenten mindestens ein Rheologieadditiv enthalten.

Geeignete Rheologieadditive sind (gegebenenfalls organisch nachbehandelte) pyrogene Kieselsäure, Cellulose oder Cellulosederivate wie Celluloseester, Alkyl- und Methylcellulosen, und Rhizinusölderivate, Schichtsilikate wie Laponite, Bentonite oder Montmorillonit, Neuburger Kieselerde, pyrogenen Kieselsäure, Polysaccharide, Polyacrylat-, Polyurethan- oder Polyharnstoffverdicker, oder Gemische von zwei oder mehreren davon. Besonders bevorzugt ist organisch nachbehandelte pyrogene Kieselsäure.

Der Anteil an Rheologieadditiv, falls vorhanden, nach dem Vermischen der Komponenten (A) und (B) liegt vorzugsweise bei etwa 1 Gew.-% bis etwa 6 Gew.-% bezogen auf das Gesamtgewicht der Komponenten (A) und (B), bevorzugt in etwa 1 Gew.-% bis etwa 5 Gew.-% bezogen auf das Gesamtgewicht der Komponenten (A) und (B).

In einer bevorzugten Ausführungsform umfasst die Komponente (A) und/oder Komponente (B) eines erfindungsgemäßen Zwei-Komponenten-Harzsystems Quarzmehl als Füllstoff und Kieselsäure als Rheologieadditiv.

### Weitere optionale Bestandteile

Ferner können Haftvermittler zur Verbesserung der Vernetzung mit dem Untergrund (beispielsweise einer (Bohr)lochwand) eingesetzt werden.

Geeignete Haftvermittler sind Silane, die mindestens eine Si-gebundene hydrolysierbare Gruppe aufweisen. Bevorzugte Beispiele sind 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan, 3-Mercaptopropylmethyldimethoxysilan und Trimethoxysilylpropyldiethylentetramin sowie deren Mischungen. Weitere geeignete Silane sind beispielsweise in der EP 3 000 792 A1 beschrieben.

Ferner können Lösemittel in dem Zwei-Komponenten-Harzsystem eingesetzt werden, um beispielsweise Aushärtezeiten gezielt zu verlangsamen oder die Gelzeit zu verändern. Bevorzugte Lösemittel können einwertige, zweiwertige oder mehrwertige Alkohole umfassen, bevorzugt einen zweiwertigen Alkohol. Unter einem mehrwertigen Alkohol wird hier ein drei- oder höherwertiger Alkohol verstanden. Stark bevorzugt kann die Komponente (B) einen zweiwertigen Alkohol, insbesondere Dipropylenglycol, umfassen. Alternativ stark bevorzugt kann die Komponente (B) Benzylalkohol umfassen.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

### Mischungsverhältnis der Komponenten (A) und (B)

Erfindungsgemäß ist es bevorzugt, dass das von der Komponente (A) umfasste härtbare Epoxidharz und das von der Komponente (B) umfasste mindestens eine tertiäre Amin in einem nicht-stöchiometrischen Verhältnis vorliegen, wobei der Anteil von dem mindestens einen tertiärem Amin an der durch das Vermischen der beiden Komponenten (A) und (B) entstandenen Harzmasse von etwa 3 Gew.-% bis etwa 20 Gew.-%, bevorzugt von etwa 4 bis etwa 15 Gew.-%, noch bevorzugter von etwa 5 bis etwa 10 Gew.-% bezogen auf das mindestens eine härtbare Epoxidharz beträgt.

Wenn das härtbare Epoxidharz in Komponente (A) und das mindestens eine tertiäre Amin in Komponente (B) in einem nicht-stöchiometrischen Verhältnis vorliegen, kann das erfindungsgemäße Zwei-Komponenten-Harzsystem besonders schnell aushärten. Auf diese Weise können auch größere Haftfestigkeiten, große Druckfestigkeiten, hohe Glasübergangstemperaturen und verringertes Kriechen des resultierenden ausgehärteten Systems erzielt werden.

Die Mischung wird typischerweise in einer Injektionsvorrichtung über einen Statikmischer beim Auspressen der beiden Komponenten (A) und (B) aus zwei separaten Kammern erzeugt. Daher sind übliche Mischverhältnisse der Komponenten A:B etwa 1:1 (v/v), etwa 2:1 (v/v), etwa 3:1 (v/v), etwa 5:1 (v/v) oder etwa 10:1 (v/v). In einer bevorzugten Ausführungsform beträgt das Mischungsverhältnis von etwa 1;1 (v/v) bis etwa 15:1 (v/v), besonders bevorzugt von etwa 3:1 (v/v) bis etwa 10:1 (v/v), insbesondere etwa 3:1 (v/) oder etwa 10:1 (v/v), ganz besonders bevorzugt etwa 10:1 (v/v).

### Verwendung

Bei einer erfindungsgemäßen Verwendung werden die Harzkomponente (A) und die Härterkomponente (B) mit einer geeigneten Vorrichtung, beispielsweise einem Statikmischer, wie oben beschrieben, oder einem Dissolver durchmischt, woraus eine Epoxidharzmasse resultiert.

Bei der Verwendung als chemischer Dübel erfolgt die Mischung direkt vor oder in einer Vertiefung, beispielsweise einem Loch (bevorzugt einem Bohrloch) oder Spalt, und die Epoxidharzmasse wird danach mittels einer bekannten Injektionsvorrichtung in das (ggf. zuvor gereinigte) Loch bzw. den Spalt eingebracht. Anschließend wird das zu fixierende Bauteil in die Epoxidharzmasse eingesetzt und justiert. Anschließend härtet die Harzmasse aus.

Die Härterkomponente (B) bewirkt ein Aushärten des in der Harzkomponente (A) enthaltenen Epoxidharzes, so dass die Epoxidharzmasse am Einsatzort unter Umgebungsbedingungen, etwa an der Baustelle, innerhalb einer gewünschten Zeit ein Polymer bildet. In der chemischen Reaktion hat das mindestens eine tertiäre Amin, wie etwa 2,4,6-Tris(dimethylaminomethyl)phenol, die Rolle und Funktion eines Beschleunigers. Diese chemische Reaktion ist ferner von der Temperatur, der Feuchtigkeit in Umgebung und Untergrund, der chemischen Zusammensetzung des Untergrunds, sowie von den weiteren Bestandteilen der Komponenten (A) und (B) abhängig. Umgebungsbedingungen können variieren, wie z.B. niedrige Temperaturen (z.B. 5°C) oder hohe Temperaturen (z.B. 40°C) während der Nacht-Tag-Zyklen.

In einer Ausführungsform härtet die Harzmasse bei einer Umgebungstemperatur von etwa 10°C bis etwa 35°C, bevorzugt von etwa 20°C bis etwa 30°C aus. In einer anderen Ausführungsform härtet die Harzmasse bei einer erhöhten Umgebungstemperatur von etwa 30°C bis etwa 90°C, bevorzugt von etwa 40°C bis etwa 80°C aus.

Die Härtungsreaktion kann wie oben beschrieben durch mehrere Faktoren beeinflusst werden und dadurch mehrere Stunden bis mehrere Tage andauern. Typischerweise kann die Härtungsreaktion zwischen etwa 24 h und etwa 72 h andauern. Vorzugsweise kann bereits nach einer Härtungszeit von etwa 48 h eine vollständige Aushärtung erreicht sein.

Ein Zwei-Komponenten-Harzsystem wie hierin beschrieben wird erfindungsgemäß bevorzugt für Bauzwecke eingesetzt. Der Begriff "für Bauzwecke" bedeutet das Baukleben, insbesondere von Beton/Beton, Stahl/Beton oder Stahl/Stahl oder von einem der genannten Materialien auf anderen mineralischen Materialien, die strukturelle Verstärkung von Bauteilen aus Beton, Mauerwerk und anderen mineralischen Materialien, die Armierung von Bauobjekten mit faserverstärkten Polymeren, die chemische Befestigung auf oder in Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Vertiefungen, insbesondere in (Bohr)löchern oder Spalten in verschiedenen Untergründen, wie (Stahl)beton, Mauerwerk, anderen mineralischen Materialien, Metallen (z.B. Stahl), Keramiken, Kunststoffen, Glas und Holz.

Ganz besonders bevorzugt dient ein Zwei-Komponenten-Harzsystem mit dem mindestens einen tertiären Amin zur chemischen Befestigung von Verankerungselementen in einem Loch (insbesondere einem Bohrloch) oder Spalt in einem Untergrund (insbesondere einem Bausubstrat).

Die Umgebungstemperatur kann im Verlauf der Lebenszeit eines chemischen Dübels nach dessen Aushärten schwanken. Typischerweise liegt die Umgebungstemperatur bei etwa -10°C bis etwa 60°C, bevorzugt bei etwa -5°C bis etwa 50°C, stärker bevorzugt von etwa 0°C bis etwa 40°C. Beispielsweise kann die Umgebungstemperatur etwa 30°C betragen.

Die Untergrundtemperatur kann jedoch entsprechend höher ausfallen, was im Baubereich üblicherweise der Fall ist, wenn eine starke Sonneneinstrahlung oder eine externe Wärmequelle vorliegt.

Eine erfindungsgemäße Verwendung erfolgt bevorzugt bei einer Untergrundtemperatur von etwa 30°C bis etwa 90°C, bevorzugt etwa 35°C bis etwa 85°C, stärker bevorzugt von etwa 40°C bis etwa 80°C, und noch stärker bevorzugt von etwa 45°C bis etwa 75°C. Bei einer solchen Untergrundtemperatur kann die Verwendung des mindestens einen tertiären Amins das Kriechverhalten verbessern.

In einer bevorzugten Ausführungsform ist der chemische Dübel nach dem Aushärten in der Lage, temporär oder dauerhaft Lasten bei einer Untergrundtemperatur von etwa 30°C bis etwa 90°C zu tragen.

### Bevorzugte Ausführungsformen

Bevorzugte Ausführungsformen der Erfindung haben bezüglich der Komponente (A), der Komponente (B), und der Harzmasse, welche durch Mischen von Komponente (A) und (B) erzeugt wird, die folgenden Merkmale:

### Komponente (A):

In einer bevorzugten Ausführungsform umfasst die Komponente (A) eines erfindungsgemäß verwendeten Zwei-Komponenten-Harzsystems Bisphenol-F-diglycidylether und Bisphenol-A-diglycidylether.

In einer stärker bevorzugten Ausführungsform umfasst die Komponente (A) eines erfindungsgemäß verwendeten Zwei-Komponenten-Harzsystems Bisphenol-F-diglycidylether und Bisphenol-A-diglycidylether, sowie 1,4-Butandiol-diglycidylether, Trimethylolpropan-triglycidylether, Quarzmehl und Kieselsäure.

In einer besonders bevorzugten Ausführungsform umfasst die Komponente (A) eines erfindungsgemäß verwendeten Zwei-Komponenten-Harzsystems von etwa 20 bis etwa 40 Gew.-% Bisphenol-F-diglycidylether, von etwa 10 bis etwa 25 Gew.-% Bisphenol-A-diglycidylether, sowie von etwa 2 bis etwa 10 Gew.-% 1,4-Butandiol-diglycidylether, von etwa 4 bis etwa 8 Gew.-% Trimethylolpropan-triglycidylether, von etwa 25 bis etwa 55 Gew.-% Quarzmehl und von etwa 2 bis etwa 4 Gew.-% Kieselsäure, bezogen auf das Gesamtgewicht der Komponente (A).

### Komponente (B):

In einer bevorzugten Ausführungsform umfasst die Komponente (B) von etwa 30 bis etwa 70 Gew.-% 2,4,6-Tris(dimethylaminomethyl)phenol, bezogen auf das Gesamtgewicht der Komponente (B).

In einer weiteren bevorzugten Ausführungsform umfasst die Komponente (B) eines erfindungsgemäß verwendeten Zwei-Komponenten-Harzsystems von etwa 25 bis etwa 55 Gew.-% Quarzmehl und von etwa 2 bis etwa 6 Gew.-% Kieselsäure bezogen auf das Gesamtgewicht der Komponente (B).

In einer besonders bevorzugten Ausführungsform umfasst die Komponente (B) von etwa 30 bis etwa 70 Gew.-% 2,4,6-Tris(dimethylaminomethyl)phenol, von etwa 25 bis etwa 55 Gew.-% Quarzmehl und von etwa 2 bis etwa 6 Gew.-% Kieselsäure, jeweils bezogen auf das Gesamtgewicht der Komponente (B).

### Komponenten A+B:

Ganz besonders bevorzugt als Bestandteile eines erfindungsgemäß verwendeten Zwei-Komponenten-Harzsystems sind die Kombinationen aus Epoxidharzen, Reaktivverdünnern, Rheologieadditiven und Füllstoffen mit 2,4,6-Tris(dimethylaminomethyl)phenol, welche in den Beispielzusammensetzungen verwendet werden, insbesondere in den dort verwendeten Gewichtsanteilen und ganz besonders bevorzugt in Kombination mit den dort verwendeten anderen Bestandteilen der Komponenten (A) und (B). Am bevorzugtesten sind diejenigen Zusammensetzungen der Komponenten (A) und (B), welche in den Beispielen beschrieben werden.

In einer insbesondere bevorzugten Ausführungsform werden die Komponente (A) und die Komponente (B) eines erfindungsgemäß verwendeten Zwei-Komponenten-Harzsystems in einem Mischungsverhältnis von A:B von etwa 10:1 (v/v) gemischt, wobei die Komponente (A) von etwa 20 bis etwa 40 Gew.% Bisphenol-F-diglycidylether, von etwa 10 bis etwa 25 Gew.-% Bisphenol-A-diglycidylether, sowie von etwa 2 bis etwa 10 Gew.-% 1,4-Butandiol-diglycidylether, von etwa 4 bis etwa 8 Gew.-% Trimethylolpropan-triglycidylether, von etwa 25 bis etwa 55 Gew.-% Quarzmehl und von etwa 2 bis etwa 4 Gew.-% Kieselsäure bezogen auf das Gesamtgewicht der Komponente (A) umfasst; und wobei die Komponente (B) von etwa 30 bis etwa 70 Gew.-% 2,4,6-Tris(dimethylaminomethyl)phenol, von etwa 25 bis etwa 55 Gew.-% Quarzmehl und von etwa 2 bis etwa 6 Gew.-% Kieselsäure bezogen auf das Gesamtgewicht der Komponente (B) umfasst.

Die Erfindung wird im Folgenden anhand von Ausführungsbeispielen weiter beschrieben, die jedoch nicht in einem einschränkenden Sinn verstanden werden sollen.

### Figurenbeschreibung

- **Fig. 1**: zeigt die graphische Darstellung von Log(G'), Log(G") und Tan(delta) aus DMTA-Messungen (Vergleichsbeispiele in fett).
- **Fig. 2**: zeigt die Verschiebung durch Kriechen bei 43°C

### AUSFÜHRUNGSBEISPIELE

### Herstellung der Komponenten (A) und (B)

Die verwendeten Bestandteile der Komponenten (A) und (B) sind in Tabelle 1 aufgelistet.

**Tabelle 1: Verwendete Bestandteile**

| Bestandteil | Funktion | Handelsname oder CAS | Hersteller | Land |
|---|---|---|---|---|
| Bisphenol F-basiertes Epoxidharz | Epoxidharz | Araldite GY 282 | Huntsman | Belgien |
| Bisphenol A-basiertes Epoxidharz | Epoxidharz | Araldite GY 240 | Huntsman | Belgien |
| 1,4-Butandiol-diglycidylether | Reaktivverdünner | Araldite DY-026 | Huntsman | Belgien |
| Trimethylolpropan-triglycidylether | Reaktivverdünner | Araldite DY-T | Huntsman | Belgien |
| m-Xylylendiamin (mXDA) | Primäres Amin | 1477-55-0 | MGC | Japan |
| 2,4,6-Tris(dimethylaminomethyl)phenol | Beschleuniger (tertiäres Amin) | Ancamine^{®} K54 | Air Products | Niederlande |
| Calciumnitrat Tetra-hydrat (Ca(NO₃)₂ × 4 H₂O) | Beschleuniger | 13477-34-4 | Sigma Aldrich | Deutschland |
| Glycerin | Lösemittel | 56-81-5 | Merck | Deutschland |
| Quarzmehl | Füllstoff | Millisil^{®} W12 | Quarzwerke Frechen | Deutschland |
| Kieselsäure | Rheologieadditiv | Cab-O-Sil^{®} TS-720 | Cabot Rheinfelden | Deutschland |

Zur Herstellung der Harzkomponente (A) wurden zunächst deren flüssige Bestandteile mit einem Holzspatel gemischt. Anschließend wurden Quarzmehl und Kieselsäure zugegeben und dann zunächst mit dem Holzspatel manuell und anschließend in einem Dissolver (PC Laborsystem, Volumen 1L) bei 80 mbar bei 3500 U/min für 8,5 min gerührt.

Für die Vergleichsbeispiele 1 und 2 wurde eine 80%ige Lösung Calciumnitrat in Glycerin verwendet. Dazu wurden 400 g Ca(NO₃)₂-Tetrahydrat zu 100 g Glycerin gegeben und etwa 3 Stunden lang bei 50°C gerührt, bis das Salz vollständig gelöst vorlag.

Zur Herstellung der Härterkomponente (B) wurden zunächst m-Xylylendiamin (mXDA) und/oder 2,4,6-Tris(dimethylaminomethyl)phenol in einen Plastikeimer gegeben. Für die Vergleichsbeispiele 1 und 2 wurde die Calciumnitrat-Lösung zugegeben und mit dem Holzspatel manuell vermengt. Anschließend wurden das Quarzmehl und die Kieselsäure zu der entstandenen Mischung zugegeben und in einem Dissolver (PC Laborsystem, Volumen 1L) bei 80 mbar und 3500 U/min für 8,5 min gerührt.

### Vorbereitung für die Verwendung der Komponenten (A) und (B)

Für die Vergleichsbeispiele 1 und 2 wurden die Komponenten (A) und (B) kurz vor deren Einsatz für 30 s mit Hilfe eines Speedmixers (Fa. Hauschild, Hamm) im unten in Tabelle 2 angegebenen Verhältnis miteinander vermischt. Für die Verwendung als chemischer Dübel wurde die erhaltene Mischung unmittelbar nach dem Vermischen in eine 1-Komponenten-Kartusche gefüllt. Aus der 1-Komponenten-Kartusche erfolgte durch eine Düse die Injektion direkt in das Bohrloch.

Für das erfindungsgemäße Beispiel wurden die Komponenten (A) und (B) in eine Hartkartusche mit dem gewünschten Mischungsverhältnis (10:1 (v/v)) gefüllt. Für die Injektion in das Bohrloch wurde ein Statikmischer an die Hartkartusche angeschlossen und das Epoxidharzgemisch mit einem Dispenser dosiert. Die Epoxidharzmischung wurde nach der Entsorgung der ersten drei Abzüge injiziert, um eine ordnungsgemäße Durchmischung beider Komponenten sicherzustellen.

### Messmethoden für die Charakterisierung der Zwei-Komponenten-Harzsysteme

### Auszugsversuche aus Beton

Gemäß EAD 330499-01-0601 wurden zunächst Bohrlöcher mit einem Durchmesser von 14 mm in einen horizontal liegenden Betonplatte (C20/25) mit einem Hammerbohrer gebohrt. Die Bohrlöcher wurden gereinigt (2× Ausblasen mit 6 bar Druckluft, 2x gebürstet und 2x Ausblasen mit 6 bar Druckluft). Anschließend wurden die Bohrlöcher vom Bohrlochgrund her mit der jeweiligen zu prüfenden Epoxidharzmasse, welche wie oben beschreiben aus den jeweiligen Komponenten (A) und (B) hergestellt wurde, zu zwei Dritteln befüllt. In das Bohrloch wurde eine Stahl-Gewindestange (M12) von Hand bis in eine Einbindetiefe von 60 mm eingedrückt. Der Überschuss der Epoxidharzmasse wurde mittels eines Spachtels entfernt. Die Aushärtung erfolgte bei der im jeweiligen Versuch angegebenen Temperatur und für die für den jeweiligen Versuch angegebene Zeit. Danach wurde die Gewindestange herausgezogen bis zum Versagen unter Messung der Zugfestigkeit (in MPa). Die Zugfestigkeit wurde jeweils dreimal bestimmt und die Standardabweichung (SD) berechnet.

### Druckfestigkeit

Die Proben wurden wie oben für die Auszugsversuche beschrieben vorbereitet und wie unten im jeweiligen Versuch beschrieben ausgehärtet. Die Aushärtung erfolgte in einem PE-Rohr mit dem Innendurchmesser 6 mm. Anschließend wurden die Proben auf eine Länge von 10 mm (planparallele Flächen) geschnitten. Die Proben wurden für 5 Tage bei 23°C und 50 % rel. Feuchte konditioniert. Die Bestimmung der Druckfestigkeit sowie des zugehörigen E-Moduls wurde in Anlehnung an die DIN EN ISO 604:2003-12 mit einer Prüfgeschwindigkeit von 1 mm/min durchgeführt. Die Messung erfolgte mit einer Prüfmaschine der Firma Zwick Roell.

### Thermomechanische Analyse (DMTA, Dynamic mechanical thermal analysis)

Um die thermomechanischen Eigenschaften einer ausgehärteten Epoxidharzmischung zu bestimmen, wurden Probenzylinder von 1 cm Durchmesser und 5 cm Länge hergestellt. Die Epoxidharzmischung wurde dazu in einen PE-Rohr mit dem Innendurchmesser 6 mm gepresst und für 24 h bei 25°C ausgehärtet. Anschließend wurde der mit der inzwischen ausgehärteten Epoxidharzmischung gefüllte PE-Rohr in 5 cm lange Stücke geschnitten, danach wurden die Epoxidharzzylinder aus dem PE-Rohr herausgedrückt. Die Zylinder wurden dann 5 Tage lang in einer temperaturgeregelten Kammer bei 23°C und 50% rel. Luftfeuchtigkeit gelagert, bevor sie mit einem HAAKE MARS Rheometer gemessen werden.

In den anschließenden DMTA-Experimenten wurden das Speichermodul (G'), das Verlustmodul (G") und der Verlustwinkel tan delta (δ) in Abhängigkeit von der Temperatur in Anlehnung an die DIN EN ISO 6721-11:2019-06 bestimmt. Aus den erhaltenen Kurven konnte die Glasübergangstemperatur (Tg) aus dem Peak in der Verlustmodulkurve bestimmt werden.

### Kriechverhalten

Die Proben wurden wie oben für die Auszugsversuche beschrieben vorbereitet und 24 Stunden bei 23°C ausgehärtet. Nach anschließenden 24 Stunden Lagerung bei 43°C wurden Kriechversuche ebenfalls bei 43°C durchgeführt. Zur Untersuchung des Kriechverhaltens wurde gemäß EAD 330499-01-0601 ein Kriechversuch wie oben beschrieben mit einer Dauerlast von 21 kN durchgeführt und die Verschiebung der Gewindestange über die Zeit gemessen.

### Ergebnisse

Tabelle 2 listet die Anteile der einzelnen Bestandteile an den Komponenten (A) und (B) in den (Vergleichs-)Beispielen 1 und 2 in Gewichtsprozent (Gew.-%) auf.

**Tabelle 2: (Vergleichs)beispiele 1 und 2**

| | | **Beispiele (Gewichtsanteile in Gew.-%)** | | | |
|---|---|---|---|---|---|
| **Bestandteile** | **Funktion** | **VergleichsBeispiel 1** | **Vergleichsbeispiel 2** | **Beispiel 1** | **Beispiel 2** |
| **Komponente (A)** | | | | | |
| | | | | | |
| Bisphenol A-basiertes Epoxidharz | Epoxidharz | 35 | 35 | 35 | 25,3 |
| Bisphenol F-basiertes Epoxidharz | Epoxidharz | 18,8 | 18,8 | 18,8 | 13,6 |
| 1,4-Butandiol-diglycidylether | Reaktivverdünner | 6,7 | 6,7 | 6,7 | 4,9 |
| Trimethylolpropan-triglycidylether | Reaktivverdünner | 6,7 | 6,7 | 6,7 | 4,9 |
| Quarzmehl | Füllstoff | 30 | 30 | 30 | 48,7 |
| Kieselsäure | Rheologiead ditiv | 2,7 | 2,7 | 2,7 | 2,7 |
| Gesamt | | 100 | 100 | 100 | 100 |
| | | | | | |

| **Komponente (B)** | | | | | |
|---|---|---|---|---|---|
| 2,4,6-Tris(dimethylaminomethyl)-phenol | Beschleuniger | 0 | 5 | 62,4 | 41 |
| mXDA | Primäres Amin | 36,8 | 36,8 | 0 | 0 |
| Ca(NO₃)₂ (80% in Glycerin) | Beschleuniger | 1,9 | 1,9 | 0 | 0 |
| Quarzmehl | Füllstoff | 57,3 | 52,3 | 32,6 | 54 |
| Kieselsäure | Rheologieadditiv | 4 | 4 | 5 | 5 |
| Gesamt | | 100 | 100 | 100 | 100 |
| | | | | | |

| **Komponente (A) und (B)** | | | | | |
|---|---|---|---|---|---|
| Verhältnis A:B (v/v) | | 3:1 | 3:1 | 10:1 | 10:1 |
| 2,4,6-Tris(dimethylaminomethyl)-phenol / Gesamt (Gew.-%) | | 0 | 1,4 | 5,2 | 3,6 |
| 2,4,6-Tris(dimethylaminomethyl)-phenol / Epoxidharz (Gew.-%) | | 0 | 3,6 | 10,8 | 10,4 |

Die Epoxidharzmischungen der Beispiele 1 und 2 sowie der Vergleichsbeispiele 1 und 2 wurden aus den Komponenten (A) und (B) gemäß Tabelle 2 hergestellt. Danach wurden die wie oben beschriebenen Auszugsversuche durchgeführt. Dazu wurden die Epoxidharzmischungen zunächst für 24 h bei 25°C und anschließend 24 h bei 80°C ausgehärtet. Die Zugfestigkeit der ausgehärteten chemischen Dübel wurde wie oben beschrieben bestimmt.

In Tabelle 3 sind die Messergebnisse für die Vergleichsbeispiele 1 und 2 sowie die Beispiele 1 und 2 gezeigt. Die Zugfestigkeit aller getesteten chemischen Dübel lag auf gleichem Niveau. Daraus lässt sich schließen, dass erfindungsgemäß hergestellte chemische Dübel ebenso hohe Zugfestigkeiten erreichen können wie im Stand der Technik beschriebene, aus Epoxid-Amin-Systemen mit primären Aminen hergestellte chemische Dübel. Ferner zeigt das Ergebnis, dass ein hoher Anteil von 2,4,6-Tris(dimethylaminomethyl)phenol, wie in Beispiel 1, eine vergleichbare Zugfestigkeit zu einem chemischen Dübel mit einem niedrigeren Anteil von 2,4,6-Tris(dimethylaminomethyl)phenol aufweist.

**Tabelle 3: Messergebnisse der Auszugsversuche aus Beton**

| | **Vergleichsbeispiel 1** | **Vergleichsbeispiel 2** | **Beispiel 1** | **Beispiel 2** |
|---|---|---|---|---|
| Aushärtung: 24 h bei 25°C, dann 24 h bei 80°C (in MPa) | 21 | 23 | 21 | 21 |

Die Druckfestigkeit wurde wie oben beschrieben für das Vergleichsbeispiel 1 und das Beispiel 1 bestimmt. Für die Messung der Druckfestigkeit wurden die chemischen Dübel für 5 Tage bei 25°C ausgehärtet.

Die Testergebnisse zur Druckfestigkeit in Tabelle 4 zeigen eine Verbesserung der Druckfestigkeit in Beispiel 1 mit einem erfindungsgemäßen Anteil an 2,4,6-Tris(dimethylaminomethyl)phenol gegenüber Vergleichsbeispiel 1 ohne 2,4,6-Tris(dimethylaminomethyl)phenol.

**Tabelle 4: Druckfestigkeit bestimmt durch Auszugsversuche aus Beton**

| | Druckfestigkeit [MPa] | E-Modul (Druck) [GPa] |
|---|---|---|
| **Vergleichsbeispiel 1** | 103 | 2,5 |
| **Beispiel 1** | 114 | 4,9 |

Sowohl die Druckfestigkeit als auch das E-Modul sind im Beispiel 1 deutlich höher als im Vergleichsbeispiel 1.

Um die mechanischen Eigenschaften bei erhöhten Temperaturen zu bestimmen, wurden DMTA-Experimente mit chemischen Dübeln, hergestellt gemäß Vergleichsbeispiel 2 und erfindungsgemäßem Beispiel 1, wie oben beschrieben durchgeführt.

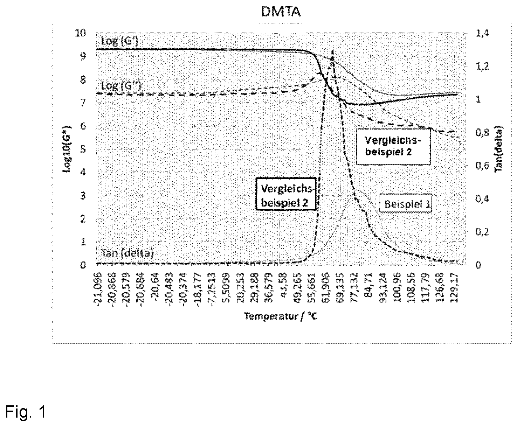

Aus den DMTA-Daten (vgl. Abbildung 1) wurde die Glasübergangstemperatur Tg als das Maximum des tan (delta) bestimmt. Sie betrug 66°C für das Vergleichsbeispiel 2 und 80°C für das erfindungsgemäße Beispiel 1, siehe Tabelle 5. Beispiel 1 zeigte in der Messung eine höhere Tg und ein späteres G'. Diese sind vorteilhaft, wenn die ausgehärtete Epoxidharzmischung als chemischer Dübel bei erhöhter Temperatur verwendet wird, da diese Daten implizieren, dass der chemische Dübel höheren Belastungen bei einer erhöhten Untergrundtemperatur, wie etwa über etwa 30°C, insbesondere über etwa 40°C, standhält. Diese erhöhte Glasübergangstemperatur Tg ist auf den erfindungsgemäßen Anteil an 2,4,6-Tris(dimethylaminomethyl)phenol zurückzuführen.

**Tabelle 5: Glasübergangstemperatur bestimmt durch DMTA-Messungen**

| | **Tg aus DMTA tan(delta) max /°C** |
|---|---|
| Vergleichsbeispiel 2 | 66 |
| Beispiel 1 | 80 |

Um das Kriechverhalten des chemischen Dübels bei erhöhten Temperaturen zu untersuchen, wurden die chemischen Dübel wie in den Auszugsversuchen beschrieben vorbereitet und 24 Stunden bei 23°C ausgehärtet. Nach weiteren 24 Stunden Lagerung bei 43°C wurden die Kriechversuche mit einer Dauerlast von 21 kN wie oben beschrieben durchgeführt. Verglichen wurden zwei chemische Dübel gemäß Beispiel 1 hergestellt wurden, und zwei chemische Dübel gemäß Vergleichsbeispiel 2.

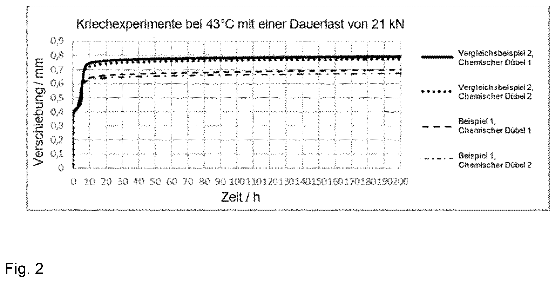

Die beobachtete, durch Kriechen verursachte Verschiebung der chemischen Dübel über die Zeit ist in Abbildung 2 gezeigt. In den ersten Stunden findet eine stärkere Verschiebung, das sogenannte primäre Kriechen statt, wobei sich nach etwa 8 h eine stationäre Phase, das sogenannte sekundäre Kriechen, einstellt. Die Messung der Verschiebung wurde über 200 Stunden fortgesetzt, wobei ein Plateau der Verschiebungskurve erreicht wurde. Zur vergleichenden Betrachtung der chemischen Dübel wurde die Verschiebung nach 8 h für die Auswertung herangezogen. Dabei zeigten beide chemischen Dübel des erfindungsgemäßen Beispiels 1 eine geringere Verschiebung als die des Vergleichsbeispiels 2.

Diese Ergebnisse zeigen, dass das Kriechen bei Verwendung bei erhöhter Temperatur für das Beispiel mit einem hohen Anteil an 2,4,6-Tris(dimethylaminomethyl)phenol geringer ausfiel als für das Vergleichsbeispiel mit einem niedrigen Anteil an 2,4,6-Tris(dimethylaminomethyl)phenol. Somit ist ein bestimmter Anteil an 2,4,6-Tris(dimethylaminomethyl)phenol erfindungswesentlich, um das Kriechen eines chemischen Dübels zu reduzieren.

## Patentansprüche

1. Verwendung von mindestens einem tertiären Amin, um das Kriechen eines ausgehärteten chemischen Dübels bei einer Untergrundtemperatur von etwa 30°C bis etwa 90°C im Vergleich zu einem chemischen Dübel mit einem geringeren oder keinem Anteil des mindestens einen tertiären Amins zu verringern,
wobei der ausgehärtete chemische Dübel durch Vermischen der Komponenten (A) und (B) eines Zwei-Komponenten-Harzsystems und anschließendes Aushärten hergestellt wurde, wobei das Zwei-Komponenten-Harzsystem aus:
einer Harzkomponente (A) umfassend mindestens ein härtbares Epoxidharz, und
einer Härterkomponente (B) umfassend das mindestens eine tertiäre Amin,
besteht,
wobei das mindestens eine tertiäre Amin ausgewählt ist aus der Gruppe bestehend aus 2,4,6-Tris[(di(C₁-C₆-alkyl)amino-(C₁-C₆-alkyliden)]phenolen, 1,3,5-Tris[(di(C₁-C₆-alkyl)amino-(C₁-C₆-alkyliden)]hexahydro-1,3,5-triazinen und beliebigen Mischungen von zweien oder mehreren davon,
wobei der Anteil des mindestens einen tertiären Amins an der durch das Vermischen der beiden Komponenten (A) und (B) entstandenen Harzmasse von etwa 3 Gew.-% bis etwa 20 Gew.-% bezogen auf das mindestens eine härtbare Epoxidharz beträgt, und
wobei das Zwei-Komponenten-Harzsystem kein primäres und kein sekundäres Amin umfasst.

2. Die Verwendung gemäß Anspruch 1, wobei die Untergrundtemperatur von etwa 35°C bis etwa 85°C, bevorzugt von etwa 40°C bis etwa 80°C beträgt.

3. Verwendung eines Zwei-Komponenten-Harzsystems als chemischer Dübel zur Befestigung eines Konstruktionselements oder Verankerungsmittels in einer Vertiefung in einem Untergrund,
wobei das Zwei-Komponenten-Harzsystem aus den folgenden Komponenten besteht:
einer Harzkomponente (A) umfassend mindestens ein härtbares Epoxidharz, und
einer Härterkomponente (B) umfassend mindestens ein tertiäres Amin,
wobei die Komponenten (A) und (B) vor ihrer Verwendung gemischt werden, woraus eine Harzmasse resultiert,
wobei der Anteil des mindestens einen tertiären Amins an der durch das Vermischen der beiden Komponenten (A) und (B) entstandenen Harzmasse von etwa 3 Gew.-% bis etwa 20 Gew.-% bezogen auf das mindestens eine härtbare Epoxidharz beträgt,
wobei das mindestens eine tertiäre Amin ausgewählt ist aus der Gruppe bestehend aus 2,4,6-Tris[(di(C₁-C₆-alkyl)amino-(C₁-C₆-alkyliden)]phenolen, 1,3,5-Tris[(di(C₁-C₆-alkyl)amino- -(C₁-C₆-alkyliden)]hexahydro-1,3,5-triazinen und beliebigen Mischungen davon, bevorzugt ausgewählt ist aus der Gruppe bestehend aus 2,4,6-Tris[(di(C₁-C₆-alkyl)amino-(C₁-C₆-alkyliden)]phenolen und beliebigen Mischungen davon,
wobei das Zwei-Komponenten-Harzsystem kein primäres und kein sekundäres Amin umfasst.

4. Die Verwendung gemäß irgendeinem der vorhergehenden Ansprüche, wobei das mindestens eine tertiäre Amin ausgewählt ist aus der Gruppe bestehend aus 2,4,6-Tris[(di(C₁-C₆-alkyl)amino-(C₁-C₆-alkyliden)]phenolen, 1,3,5-Tris[3-(dimethylamino)propyl]hexahydro-1,3,5-triazin und beliebigen Mischungen von zweien oder mehreren davon, bevorzugt aus der Gruppe bestehend aus 2,4,6-Tris[(di(C₁-C₆-alkyl)amino-(C₁-C₆-alkyliden)]phenolen und beliebigen Mischungen von zweien oder mehreren davon.

5. Die Verwendung gemäß irgendeinem der vorhergehenden Ansprüche, wobei das mindestens eine tertiäre Amin ausgewählt ist aus der Gruppe bestehend aus 2,4,6-Tris(dimethylaminomethyl)phenol und 1,3,5-Tris[3-(dimethylamino)propyl]hexahydro-1,3,5-triazin und beliebigen Mischungen davon, und bevorzugt 2,4,6-Tris(dimethylaminomethyl)phenol ist.

6. Die Verwendung gemäß irgendeinem der vorhergehenden Ansprüche, wobei der Anteil des mindestens einen tertiären Amins an der durch das Vermischen der beiden Komponenten (A) und (B) entstandenen Harzmasse von etwa 4 Gew.-% bis etwa 15 Gew.-%, bevorzugt von etwa 5 bis etwa 10 Gew.-% bezogen auf das mindestens eine härtbare Epoxidharz beträgt.

7. Die Verwendung gemäß irgendeinem der vorhergehenden Ansprüche, wobei es sich bei dem mindestens einen härtbaren Epoxidharz um eine Verbindung ausgewählt aus der Gruppe bestehend aus Glycidylethern mehrwertiger Phenole mit einer Glycidylgruppenfunktionalität von etwa 1,5 oder größer und epoxidierten Pflanzenölen, sowie Mischungen von zwei oder mehreren davon handelt; bevorzugt aus der Gruppe bestehend aus Glycidylethern basierend auf Resorcin, Bisphenol A, Bisphenol F, sowie Mischungen von zwei oder mehreren davon; besonders aus der Gruppe bestehend aus Glycidylether basierend auf Bisphenol A, Bisphenol F, sowie Mischungen von zwei oder mehreren davon.

8. Die Verwendung gemäß irgendeinem der vorhergehenden Ansprüche, wobei das mindestens eine härtbare Epoxidharz nach dem Vermischen der Komponenten (A) und (B) in etwa 30 Gew.-% bis etwa 70 Gew.-% bezogen auf das Gesamtgewicht der Komponenten (A) und (B), bevorzugt in etwa 40 Gew.-% bis etwa 65 Gew.-% bezogen auf das Gesamtgewicht der Komponenten (A) und (B) vorliegt.

9. Die Verwendung gemäß irgendeinem der vorhergehenden Ansprüche, wobei das Zwei-Komponenten-Harzsystem zusätzlich mindestens einen Reaktivverdünner umfasst, wobei der Reaktivverdünner in Komponente (A) enthalten ist.

10. Die Verwendung gemäß irgendeinem der vorhergehenden Ansprüche, wobei das Zwei-Komponenten-Harzsystem zusätzlich mindestens einen Füllstoff umfasst, wobei der Füllstoff entweder in Komponente (A) oder in Komponente (B) oder in beiden Komponenten (A) und (B) enthalten ist.

11. Die Verwendung gemäß Anspruch 10, wobei der mindestens eine Füllstoff ausgewählt ist aus der Gruppe bestehend aus Quarzsand, Glas, Korund, Porzellan, Steingut, Schwerspat, Feldspat, Hüttensand, Gips, Zement (beispielsweise Portlandzement), Talkum, Flugasche, Kalkstein, sowie beliebigen Mischungen von zweien oder mehreren davon.

12. Die Verwendung gemäß Anspruch 10 oder 11, wobei der mindestens eine Füllstoff nach dem Vermischen der Komponenten (A) und (B) in etwa 10 Gew.-% bis etwa 55 Gew.-% bezogen auf das Gesamtgewicht der Komponenten (A) und (B), bevorzugt in etwa 30 Gew.-% bis etwa 50 Gew.-% bezogen auf das Gesamtgewicht der Komponenten (A) und (B) vorliegt.

13. Die Verwendung gemäß irgendeinem der vorhergehenden Ansprüche, wobei das Zwei-Komponenten-Harzsystem zusätzlich mindestens ein Thixotropiermittel umfasst, wobei das mindestens eine Thixotropiermittel entweder in Komponente (A) oder in Komponente (B) oder in beiden Komponenten (A) und (B) enthalten ist, und wobei das mindestens eine Thixotropiermittel ausgewählt ist aus der Gruppe bestehend aus organisch nachbehandelter pyrogener Kieselsäure, Bentoniten, Alkyl- und Methylcellulosen und Rhizinusölderivaten, sowie beliebigen Mischungen von zweien oder mehreren davon.

14. Die Verwendung gemäß Anspruch 13, wobei das mindestens eine Thixotropiermittel nach dem Vermischen der Komponenten (A) und (B) in etwa 1 Gew.-% bis etwa 6 Gew.-% bezogen auf das Gesamtgewicht der Komponenten (A) und (B), bevorzugt in etwa 2 Gew.-% bis etwa 5 Gew.-% bezogen auf das Gesamtgewicht der Komponenten (A) und (B) vorliegt.

15. Die Verwendung gemäß irgendeinem der vorhergehenden Ansprüche, wobei die beiden Komponenten (A) und (B) zunächst in zwei separaten Kammern eines Injektionssystems vorliegen und unmittelbar vor deren Einsatz aus den jeweiligen Kammern gepresst und über einen Statikmischer gemischt werden, wobei die entstehende Harzmasse dabei aus der Spitze des Statikmischers in ein Loch oder eine Spalte in dem Untergrund injiziert wird, um dort anschließend auszuhärten.

16. Die Verwendung gemäß irgendeinem der vorhergehenden Ansprüche zur chemischen Befestigung eines Konstruktionselements oder Verankerungsmittels ausgewählt aus der Gruppe bestehend aus Ankerstangen, Ankerbolzen, Gewindestrangen, Gewindehülsen, Betoneisen, Bewehrungseisen und Schrauben in einem Untergrund ausgewählt aus der Gruppe bestehend aus Beton, Mauerwerk, Stahl, Keramiken, Kunststoffen, Glas, Holz, und beliebigen Kombinationen davon.
